# EUROPÄISCHE PATENTSCHRIFT

(11) **EP 2 154 310 B1**
(45) Veröffentlichungstag und Bekanntmachung des Hinweises auf die Patenterteilung: **01.03.2017**
(21) Anmeldenummer: 09009726.2
(22) Anmeldetag: 28.07.2009
(51) Int. Cl.: C04B 111/00, C04B 111/28, C04B 28/02, C04B 28/10, E04F 13/08, E04F 13/14

(54) **Gebäudewandbekleidung mit Bekleidungsplatten**
Building wall cladding with cladding boards
Revêtement mural de bâtiments doté de plaques de revêtement

(30) Priorität: 06.08.2008 DE 102008036590
(43) Veröffentlichungstag der Anmeldung: 17.02.2010
(73) Patentinhaber: DAW SE, 64372 Ober-Ramstadt (DE)
(72) Erfinder: Michaelis, Uwe, 64295 Darmstadt (DE); Meyer, Markus, 64720 Michelstadt (DE); Runge, Gottfried, 93138 Lappersdorf (DE)
(74) Vertreter: Metten, Karl-Heinz

(56) Entgegenhaltungen:
- EP-A2- 0 165 469
- EP-A2- 0 165 469
- CA-A1- 2 517 733
- CA-A1- 2 517 733
- DE-A1- 2 421 380
- DE-A1- 2 421 380
- DE-C1- 10 126 560
- DE-U1- 29 622 732
- JP-A- 8 239 982
- JP-A- 11 256 121
- JP-A- 55 167 069
- JP-A- 61 235 470
- US-A- 4 714 507
- US-A- 4 714 507
- DATABASE WPI Week 200611 Thomson Scientific, London, GB; AN 2006-107200 XP002551814 & SE 0 400 599 A (HAGMANS FUKTSPAERRTEKNIK AB) 11. September 2005 (2005-09-11)

## Beschreibung

Die Erfindung betrifft eine Gebäudewandbekleidung aus einer Mehrzahl an Gebäudewandbekleidungsplatten mit einer rückseitigen Beschichtung aus einem Haftgrund. Unter einer Gebäudewand- oder Bauwerksbekleidungsplatte, im Folgenden auch kurz "Platte" genannt, ist keine leichte Dämmstoffplatte zum Beispiel für ein Wärmedämmverbundsystem zu verstehen, sondern eine "schwere" Platte beispielsweise aus Naturstein. Im Gegensatz zu Dämmplatten bildet sie in aller Regel den sichtbaren Bestandteil der Fassadenverkleidung eines Gebäudes. Unter einer Gebäudewandbekleidung und einem Fassadenbekleidungssystem sind demzufolge jeweils sichtbare Bauteile zu verstehen, die eine vorgehängte oder ggf. hinterlüftete Fassade oder eine Vorsatzschale bilden.

Eine Verkleidung von Gebäudewänden und Fassaden mit Natursteinen wird oft aus ästhetischen, praktischen oder denkmalpflegerischen Gründen gewählt. Natursteinplatten weisen jedoch oft eine hohe Masse auf, so dass eine sichere Befestigung an der Gebäudewand erforderlich ist. Bei bekannten Natursteinfassadenbekleidungen, so genannten vorgehängten Fassaden, werden die Platten punktuell an einer metallischen Unterkonstruktion befestigt. Die Herstellung einer derartigen Fassade ist aufwändig und erfordert besondere Sicherheitsvorkehrungen gegen Beschädigung der Befestigungspunkte der Platten, damit sie sich zum Beispiel bei einem Anprall nicht schlagartig und vollständig von der Unterkonstruktion lösen.

Einer erhöhten Wärme- und Schalldämmung dagegen dienen so genannte Wärmedämmverbundsysteme. Sie bestehen üblicherweise aus einem leichten Dämmmaterial, das in Plattenform an einer Gebäudeaußenwand geklebt und gegebenenfalls zusätzlich mechanisch befestigt wird. Darauf wird eine Spachtelmasse mit einem darin eingebetteten Gewebe als Armierungsschicht aufgebracht. Sie dient als Unterlage für unterschiedliche Oberflächenmaterialen, im allgemeinen Oberputz. Das Dämmmaterial ist also im Einbauzustand regelmäßig nicht sichtbar.

Es ist Aufgabe der Erfindung, eine Gebäudewandverkleidung für eine Fassade mit schweren Gebäudewandbekleidungsplatten anzugeben, deren Montage einfacher ist als bei herkömmlichen Systemen.

Diese Aufgabe wird erfindungsgemäß durch eine Gebäudewandbekleidung nach Anspruch 1 gelöst. Dabei wird der Haftgrund als Beschichtung einer Rückseite einer schweren Gebäudewandbekleidungsplatte eingesetzt, die mineralisches und organisches Bindemittel und Füllstoff enthält. Der Haftgrund ist durch die spezielle Zusammensetzung gemäß Anspruch 1 universell einsetzbar, so dass das Material für die Gebäudewandbekleidungsplatte nahezu unerheblich ist. Sie kann aus Naturstein bzw. Naturwerkstein, Kunststein, Glas oder aus Werkstoffagglomeraten daraus bestehen. Zweck des Haftgrunds ist es, auf einer Gebäudebekleidungsplatte nahezu beliebigen Ursprungs eine standardisierte Beschichtung auf deren Rückseite zu bilden, die eine Befestigung auf einer Gebäudeaußenwand durch Verklebung der beschichteten schweren Platte mit einem Standardprodukt bzw. einem auf dem Haftgrund abgestimmten Produkt ermöglicht. Die Beschichtung der Bekleidungsplatte stellt eine Grundierung zur Haftungsverbesserung des Klebers an der Platte dar und wirkt so an deren Befestigung mit. Sie kann günstigerweise werkseitig erfolgen. So können ideale Verklebungs- und Aushärtbedingungen entsprechend dem jeweiligen Material der Bekleidungsplatte geschaffen werden, um eine gute Verbindung zwischen Bekleidungsplatte und dem Befestigungshaftgrund zu erzielen. Auf der Baustelle dagegen braucht nur noch ein Klebstoff vorgehalten und eingesetzt zu werden, der mit dem Haftgrund optimal zusammenwirkt.

Nach einer weiteren vorteilhaften Ausgestaltung der Erfindung kann der Haftgrund 20 bis 40 Masse-% eines mineralischen Bindemittels, 10 bis 40 Masse-% eines organischen Bindemittels und 30 bis 50 Masse-% an Füllstoff enthalten. Gegebenenfalls können noch Additive zugegeben werden. Im Übrigen aber erfordert der Haftgrund keine weiteren Bestandteile, so dass seine Herstellung relativ einfach und kostengünstig ist.

Nach einer vorteilhaften Ausgestaltung der Erfindung kann der Haftgrund eine Polymerdispersion enthalten. Dadurch lässt sich die Leistungsfähigkeit des Haftgrundes steigern, nämlich seine Haftung auf seinem Untergrund bzw. der Rückseite der Bekleidungsplatte verbessern, und seine Elastizität erhöhen.

Nach einer weiteren vorteilhaften Ausgestaltung der Erfindung kann der Haftgrund Polymerisate, Copolymerisate oder Terpolymerisate aus Acrylsäureester/Styrol oder Butylacrylat/Styrol oder VinylacetaWersatat oder Vinylacetat/Ethylen oder VinylacetatlVersaticsäurevinylester (VeoVa) oder Vinylchlorid/Vinyllaurat/Ethylen oder daraus hergestellte redispergierbare Dispersionspulver als anorganische Bindemittel und Silikate und/oder Carbonate als Füllstoff umfassen. Die Füllstoffe können als Abstandhalter zwischen den Bindemitteln dienen und so für eine möglichst gleichmäßige Verteilung des Bindemittels und homogene Eigenschaften des Haftgrunds sorgen. Sie harmonieren außerdem mit den übrigen Bestandteilen des Haftgrunds, so dass sie dessen Homogenität und Abbindeverhalten nicht negativ beeinflussen.

Nach einer weiteren vorteilhaften Ausgestaltung der Erfindung kann der Haftgrund als mineralische Bindemittel Zement und/oder Kalkhydrat und/oder latent hydraulische Bindemittel enthalten. Sie stellen gebräuchliche und kostengünstige Ausgangsmaterialen dar, die die Herstellung und die Verarbeitung des Haftgrunds weder verteuern noch verkomplizieren.

Bei einer weiteren vorteilhaften Ausgestaltung der Erfindung kann der Haftgrund eine Komponente aus der Gruppe: Entschäumer, Luftporenbildner, Celluloseether, Verflüssiger, Stellmittel, Stabilisator, Dispergiermittel, Hydrophobierungsmittel, Verzögerer, Beschleuniger oder eine Mischung aus diesen Komponenten als Additive umfassen. Dadurch lassen sich spezielle Eigenschaften des Haftgrundes erzielen, verstärken oder abmildern, um seine Reaktion mit der Bekleidungsplatte oder dem Klebstoff zur Befestigung der Bekleidungsplatte zu verbessern. Beispielsweise kann dadurch seine Elastizität erhöht oder durch Zugabe von Hydrophobierungsmittein die Wasseraufnahmefähigkeit des Haftgrundes reduziert werden. Infolgedessen verbessern sich seine Haftungsqualität im Allgemeinen und seine Frostbeständigkeit im Besonderen.

Für die Lösung der eingangs erwähnten Aufgabe wird auf eine schwere Gebäudewand- oder Bauwerksbekleidungsplatte aus Naturstein, Naturwerkstein, Kunststein, Glas oder aus Agglomeraten daraus, mit einer Beschichtung aus dem beschriebenen Haftgrund zurückgegriffen. Unabhängig von ihrem Material und ihrer Beschaffenheit kann sie aufgrund ihrer Beschichtung mit dem in Anspruch 1 beschriebenen Haftgrund auf der Baustelle problemlos mit einem Standard- bzw. auf den Befestigungshaftgrund abgestimmten Klebstoff an der Gebäudeaußenwand befestigt werden. Unabhängig vom Material der Gebäudebekleidungsplatte kann dadurch für jede Platte derselbe Klebstoff verwendet werden. Dies vereinfacht die Montage der Gebäudebekleidungsplatten erheblich. Die vielen verschiedenen Materialien der Bekleidungsplatte bieten eine hohe Gestaltungsvielfalt in Struktur und Farbe, die der Platte vielfältige Einsatzmöglichkeiten zur Bekleidung sehr unterschiedlicher Gebäude beschert. Bei einer Rezeptur des Haftrundes mit einem hohen Anteil an organischem Bindemittel muss der Haftgrund nicht separat an die unterschiedlichen Materialien der Bekleidungsplatte angepasst werden. Eine derartige Rezeptur kann für alle Plattenmaterialien verwendet werden. Dadurch lässt sich derselbe Haftgrund universell für eine große Bandbreite an Platten einsetzen, was einen Kostenvorteil darstellt.

Nach einer vorteilhaften Ausgestaltung der Erfindung kann der Haftgrund eine Dicke in einem Bereich zwischen einem und zehn Millimetern aufweisen. Je geringer die rückseitige Beschichtung ist, umso weniger trägt die Verkleidung auf. Je größer dagegen ihre Mächtigkeit gewählt wird, umso mehr Bedeutung gewinnt ihre stabilisierende Wirkung für die Bekleidungsplatte.

In dem Haftgrund sind Fasern oder ein Gewebe als Armierung eingebettet. Dadurch wird die Stabilisierungseigenschaft des Haftgrundes für die Bekleidungsplatte noch verstärkt.

Nach einer weiteren vorteilhaften Ausgestaltung der Erfindung kann die Armierung aus einem Gewebe oder Geflecht mit einem aushärtbaren Bindemittel gebildet sein. Das Gewebe oder Geflecht kann also seinerseits über eine Bindemittelappretur verfügen. Dadurch gewinnt das Gewebe oder Geflecht zusätzlich an Stabilität, so dass es die Bekleidungsplatte sowohl beim Transport als auch bei dessen Montage noch effektiver verstärken kann.

Der Befestigungshaftgrund stellt einen immer gleichen
Klebepartner für den Kleber dar, und zwar unabhängig von der Art und dem Material der Platte. Damit muss der bauseits zu verarbeitenden Kleber nicht auf die Platte abgestimmt werden, sondern bestenfalls der werkseitig auf die Platte aufgebrachte Befestigungshaftgrund. Damit vereinfacht sich Verarbeitung der Platte auf der Baustelle erheblich.

Nach der Erfindung sind die Platten auf der Außenfläche eines an der Gebäudewand befestigten Wärmedämmverbundsystems aufgeklebt. In dieser Kombination kann die Erfindung ihre Stärken besonders gut ausspielen: Weil zur Befestigung der Platten die gesamte gedämmte Gebäudeaußenwand zur Verfügung steht, können die Platten vollflächig verklebt werden. Damit sinkt die flächenbezogene Belastung der Verklebung, also die Kräfte, die beispielsweise pro Quadratzentimeter Verklebung von der Platte auf ihren Untergrund übertragen werden müssen. Außerdem können die Platten aufgrund ihrer vollflächigen Verklebung selber dünner ausgebildet sein, da sie selbst keine so hohe Eigenstabilität aufweisen müssen wie bei einer punktuellen Befestigung. Die dadurch bedingte Materialeinsparung für die Platten verbilligt das System erheblich. Selbstverständlich können die Platten auch auf anderen geeigneten Untergründen an einer Gebäudeaußenwand vollflächig verklebt werden. Ein Wärmedämmverbundsystem als Unterlage ist dafür selbstverständlich nicht erforderlich.

Bei dem Verfahren zur Bekleidung einer Gebäudewand mit Platten wird werksseitig, also bei der Fertigung der Platte, einer später im montierten Zustand zur Gebäudewand weisenden Rückseite der Platten mit einem Haftgrund beschichtet, und bauseitig, also bei der Montage Platten an der Gebäudewand, die Platte mittels eines Klebstoffs auf ihrer beschichteten Rückseite mit der Gebäudewand oder einer an der Gebäudewand befestigten Unterkonstruktion verbunden. Auch dieses Verfahren nutzt die Vorteile der oben beschriebenen Gebäudewandbekleidung bzw. des Fassadensystems. In dem Verfahren wird ein Haftgrund wie in Anspruch 1 beschrieben verwendet. Seine besonderen Stärken zeigt dieses Verfahren, wenn die Platten auf der Außenseite eines an der Gebäudewand befestigten Wärmedämmverbundsystems aufgeklebt werden.

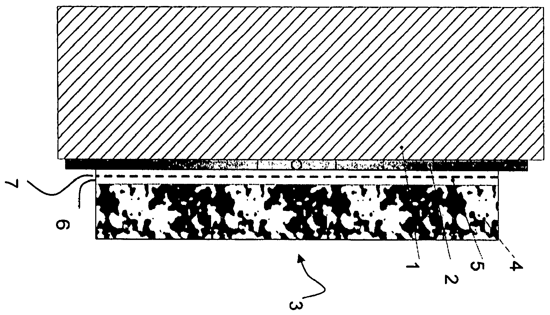

Das Prinzip der Erfindung wird im Folgenden anhand einer Zeichnung und durch Rezeptbeispiele im Prinzip noch näher erläutert. Die einzige Figur zeigt eine Schnittdarstellung einer Gebäudewand 1 mit einer Natursteinbekleidung.

Die Gebäudewand 1 trägt auf ihrer Außenseite eine vollflächig aufgebrachte Klebstoffschicht 2. Sie verbindet die Gebäudewand 1 mit einer Bekleidungsplatte 3, die vollflächig auf der Gebäudewand 1 aufgeklebt ist. Die Bekleidungsplatte 3 besteht aus einer Natursteinplatte 4 und trägt auf ihrer der Klebeschicht 2 zugewandten Seiten eine Kaschierung 5 aus einem Haftgrund 6 und einem darin als Armierung eingebetteten Gewebe 7. Die Kaschierung 5 ist ebenfalls vollflächig auf der Bekleidungsplatte 3 aufgebracht und stabilisiert sie durch die Armierung 7. Dadurch kann die Bekleidungsplatte 3 besonders dünn ausgebildet werden.

Die Natursteinbekleidung wird hergestellt, in dem zunächst der Naturstein 4 in den gewünschten Flächenabmessungen und in einer relativ geringen Dicke hergestellt wird. Anschließend erhält er werksseitig die Kaschierung 5. Sie kann also unter idealen Umgebungsbedingungen z.B. hinsichtlich Temperatur und Feuchtigkeit quasi am Fließband hergestellt werden. Ist die Kaschierung 5 auf dem Naturstein 4 vollständig ausgehärtet, so kann die Bekleidungsplatte 3 fertig konfektioniert auf die Baustelle geliefert werden. Sie erhält durch die ausgehärtete Kaschierung 5 zusätzliche Stabilität, so dass sie Transport und Lagerung trotz ihrer geringen Dicke unbeschadet überstehen kann. Bauseits wird nun die Gebäudewand 1 vollflächig mit der Klebstoffschicht 2 versehen. In den frischen und noch nicht ausgehärteten Klebstoff 2 kann nun die Bekleidungsplatte 3 gedrückt und dadurch befestigt werden. Nach Aushärten der Klebstoffschicht 2 ist die Bekleidungsplatte 3 dauerhaft und zuverlässig auf der Gebäudewand 1 befestigt.

Die Bekleidungsplatte 3 hat gegenüber herkömmlichen verklebten Platten, in der Regel Dämmstoffplatten, wegen ihres wesentlich dichteren Materials regelmäßig ein deutlich höheres Gewicht. Demzufolge muss die Verklebung sowohl der Kaschierung 5 auf der Bekleidungsplatte 3 einerseits als auch die Verklebung zwischen der Kaschierung 5 und der Klebstoffschicht 2 andererseits hinsichtlich ihrer Scherfestigkeit bzw. Haftzugfestigkeit besonders leistungsfähig sein. Die Rezepturen (s. unten) erreichen die erforderlichen Werte dafür, um die Bekleidungsplatte 3 dauerhaft und zuverlässig zu befestigen. Nach einem ausreichenden Aushärten durch Lagerung und Alterung werden mit den Rezepturen jeweils an beiden Klebefugen Werte für die Haftzugfestigkeit von regelmäßig mindestens 1 MPa erreicht.

Unabhängig von der Art des Natursteins 4 - oder eines sonstigen Materials dafür - kann für die Bekleidung 3 immer derselbe Klebstoff 2 verwendet werden, da er jedenfalls plattenseitig immer auf dieselbe Kaschierung 5 als Klebepartner trifft. Damit braucht bauseits lediglich ein Klebstoff für die Klebstoffschicht 2 vorgehalten werden. Das erleichtert und verbilligt die Montage von Bekleidungsplatten 3. Die Kaschierung 5 stellt zudem eine standardisierte Beschichtung auf der Rückseite der Bekleidungsplatte 3 dar. Der Erwerb einer bauaufsichtlichen Zulassung bzw. Freigabe für die Wandbekleidung ist also im Wesentlichen nicht mehr von dem für die Bekleidungsplatte 3 gewählten Material abhängig.

In folgenden sind beispielhafte Rezepturen aufgeführt:

| | Rezept 1: | Rezept 2: | Rezept 3: |
|---|---|---|---|
| Mineralisches Bindemittel: | 30,00% | 40,00% | 50,00% |
| Organisches Bindemittel: | 20,00% | 8,00% | 10,00% |
| Celluloseether: | 0,30% | 0,20% | 0,40% |
| Verflüssiger: | 1,00% | 0,80% | 0,50% |
| Carbonatischer Füllstoff: | 23,70% | 31,00% | 14,60% |
| Silikatischer Füllstoff: | 25,00% | 20,00% | 24,50% |

Die Rezepturen 1 bis 3 unterscheiden vor allem sich hinsichtlich ihres Gehalts an mineralischem Bindemittel. Es kann einen Anteil von 30 bis 50 Masse-% betragen. Der Anteil des organischen Bindemittels sowie der Füll- und Hilfsstoffe wurde darauf abgestimmt.

Das Rezeptbeispiel 4 setzt sich aus flüssigen und pulverförmigen Komponenten zusammen:

| Rezept 4: | | | |
|---|---|---|---|
| Pulverkomponente: | | Flüssigkomponente: | |
| Mineralisches Bindemittel: | 30,00% | Wasser: | 31,40% |
| Organisches Bindemittel: | 3,00% | Organisches Bindemittel: | 68,00% |
| Celluloseether: | 0,30% | Entschäumer: | 0,50% |
| Verflüssiger: | 1,00% | Konservierungsmittel: | 0,10% |
| Carbonatischer Füllstoff: | 5,70% | | |
| Silikatischer Füllstoff: | 60,00% | | |

Das Rezept 4 stellt also ein 2-Komponenten System aus festen und flüssigen Bestandteilen dar. Es bietet den Vorteil, dass mehr organisches Bindemittel verarbeitet werden kann als bei einem 1-Komponenten System gemäß den Rezepten 1 bis 3. Der höhere Anteil an organischem Bindemittel reduziert die Wasseraufnahmefähigkeit der abgebundenen Rezeptur. Mit geringerem Wassergehalt steigt die Frostbeständigkeit des Haftgrundes. Ein höherer Anteil an organischem Bindemittel steigert außerdem die Elastizität des Haftgrundes, so dass sich seine Haftung insgesamt verbessert. Schließlich kann diese Rezeptur nahezu uneingeschränkt für alle genannten Plattenwerkstoffe verwendet werden.

### Bezugszeichenliste:

- 1:: Gebäudewand
- 2:: Klebstoffschicht
- 3:: Bekleidungsplatte
- 4:: Natursteinplatte
- 5:: Kaschierung
- 6:: Haftgrund
- 7:: Armierung

## Patentansprüche

1. Gebäudewandbekleidung mit einer schweren Gebäudewandbekleidungs-Platte (3) aus Naturstein, Naturwerkstein, Kunststein, Glas oder einem Agglomerat daraus, die mit einer werkseitig aufgebrachten rückseitigen Beschichtung aus vollständig ausgehärtetem Haftgrund (6) enthaltend mineralisches und organisches Bindemittel und Füllstoff, wobei in dem Haftgrund (6) als Armierung (7) ein Gewebe eingebettet ist und/oder Fasern eingebettet sind, versehen ist, und mit einer auf die Beschichtung aufgetragenen, die Gebäudewandbekleidungs-Platte (3) mit einer Gebäudewand (1) oder einer an der Gebäudewand (1) befestigten Unterkonstruktion verbindenden Klebstoffschicht (2), wobei die Gebäudewandbekleidungs-Platte (3) auf der Außenfläche eines an der Gebäudewand (1) befestigten Wärmedämmverbundsystems aufgeklebt ist.

2. Gebäudewandbekleidung nach Anspruch 1, **dadurch gekennzeichnet, dass** der Haftgrund (6) eine Dicke im Bereich zischen 1 mm und 10 mm aufweist.

3. Gebäudewandbekleidung nach Anspruch 1 oder 2, **dadurch gekennzeichnet, dass** die Armierung (7) aus einem Gewebe oder Geflecht mit einem aushärtbaren Bindemittel gebildet ist.

## Claims

1. A building wall cladding with a heavy building wall cladding board (3) made from natural stone, natural ashlar, artificial stone, glass or an agglomerate of the latter, which is provided with a rear factory-applied coating made from fully cured adhesion primer (6) containing mineral and organic binding agent and filler, wherein a fabric is embedded and/or fibres are embedded into the adhesion primer (6) as reinforcement (7), and with an adhesive layer (2) applied onto the coating which joins the building wall cladding board (3) to a building wall (1) or a substructure secured to the building wall, wherein the building wall cladding board (3) is adhered onto the outer surface of a thermal insulation system fixed onto the building wall (1).

2. The building wall cladding according to claim 1, **characterised in that** the adhesion primer (6) has a thickness between 1 mm and 10 mm.

3. The building wall cladding according to claim 1 or 2, **characterised in that** the reinforcement (7) is in the form of a fabric or braid with a curable binding agent.

## Revendications

1. Revêtement mural de bâtiment avec un panneau de revêtement mural de bâtiment (3) lourd, composé de pierre naturelle, de pierre de taille, de pierre artificielle, de verre ou d'un aggloméré de ces matériaux. Ledit revêtement mural de bâtiment est pourvu d'une couche arrière appliquée à l'usine, composée d'une couche de fond (6) complètement durcie contenant un liant minéral et organique ainsi qu'une charge, la couche de fond (6) comportant un tissu et/ou des fibres qui y sont insérées en tant qu'armature (7). Ledit revêtement mural de bâtiment comporte également une couche adhésive (2) soit appliquée sur la couche arrière liant le panneau de revêtement mural de bâtiment (3) à un mur de bâtiment (1), soit appliquée à la structure porteuse fixée au mur de bâtiment (1), auquel cas le panneau de revêtement mural de bâtiment (3) est collé sur la face extérieure d'un système composite d'isolation thermique fixé au mur du bâtiment (1).

2. Revêtement mural de bâtiment selon la revendication 1, **caractérisé en ce que** la couche de fond (6) a une épaisseur de 1 à 10 mm.

3. Revêtement mural de bâtiment selon l'une quelconque des revendications 1 à 2, **caractérisé en ce que** l'armature (7) est formée à partir d'un tissu ou d'un treillis associé à un liant durcissable.
